# EUROPEAN PATENT APPLICATION

(11) **EP 4 071 696 A1**
(43) Date of publication of application: **12.10.2022**
(21) Application number: 20896150.8
(22) Date of filing: 18.11.2020
(51) Int. Cl.: G06Q 50/02, A01B 69/00

(54) **WORK INFORMATION MANAGEMENT DEVICE**

(30) Priority: 02.12.2019 JP 2019218090; 02.12.2019 JP 2019218091
(71) Applicant: Yanmar Power Technology Co., Ltd., Osaka-shi Osaka 530-0013 (JP)
(72) Inventor: MITANI, Hideki, Osaka-shi, Osaka 530-0014 (JP); MIYAUCHI, Syunsuke, Osaka-shi, Osaka 530-0013 (JP); YOSHIMINE, Takumi, Osaka-shi, Osaka 530-0013 (JP)
(74) Representative: Novagraaf International SA
(86) International application number: PCT/JP2020/043037
(87) International publication number: WO 2021/111882

(57) **Abstract**

This work information management device includes: a tractor-side information acquisition unit for acquiring tractor-side information which includes position information of a tractor (2) at each of specific times and operation information of the tractor (2) at each of specific times, such tractor-side information being acquired from the tractor (2) having mounted thereon any one of a plurality of types of work machines; and a work type estimation unit (44) for estimating the work type of work that has been carried out by a work machine (3) mounted on the tractor (2), on the basis of the tractor-side information acquired by the tractor-side information acquisition unit.

## Description

### TECHNICAL FIELD

The present invention relates to a work information management device.

### BACKGROUND ART

Patent Literature 1 discloses a technique in which a tractor mounted with a work machine is driven on a farm field to cause the work machine to perform farm work, and machine information of the work machine, position information of the tractor, and work content data are stored as work information in a remote server.

### CITATION LIST

### Patent Literature

Patent Literature 1: Japanese Unexamined Patent Application Publication No. 2019-109791

### DISCLOSURE OF INVENTION

### PROBLEMS TO BE SOLVED BY THE INVENTION

In Patent Literature 1, a tractor and a work machine are electrically connected, so that the tractor acquires machine information indicating the type of the work machine and stores the acquired machine information in a memory of the tractor.

In recent years, a method has been proposed in which a tractor and a work machine are connected by radio so that the tractor acquires machine information of the work machine.

However, in order to realize data communication between the tractor and the work machine, it is necessary to install a communication device in the tractor and the work machine. In addition, when using a work machine of an old type, it may not be possible to install a communication device in the work machine.

In many cases, an operator of the tractor manually inputs machine information of the work machine to the tractor before starting the work, to store the machine information of the work machine in the memory of the tractor. However, in such a method, it is necessary to manually input the machine information every time the work machine is replaced, and thus, unfortunately, the operation is troublesome and the input operation is easily forgotten.

An object of the present invention is to provide a work information management device capable of automatically estimating, by a new method, a work type of work performed by a work machine.

### MEANS FOR SOLVING THE PROBLEMS

One embodiment of the present invention provides a work information management device including a tractor-side information acquisition unit that acquires, from a tractor mounted with any of a plurality of types of work machines, tractor-side information including position information of the tractor at each time and operation information of the tractor at each time, and a work type estimation unit that estimates a work type of work performed by the work machine mounted in the tractor, based on the tractor-side information acquired by the tractor-side information acquisition unit.

According to such a configuration, it is possible to automatically estimate a work type of work performed by the work machine.

In one embodiment of the present invention, the work type estimation unit includes a per-unit period work estimation unit that divides a work period into a plurality of unit periods, and estimates, for each unit period, a work type of work performed in the unit period as a unit period work type, and the work type estimation unit estimates, for the per-unit period work type, a work type of the work period, based on a number of the estimated work type.

In one embodiment of the present invention, the per-unit period work estimation unit estimates the per-unit period work type by using a machine learning method.

In one embodiment of the present invention, the per-unit period work estimation unit generates, based on the positioning information and the operation information, input information for a machine learning model in each unit period, and estimates a work type of each unit period by using the generated input information and the machine learning model.

In one embodiment of the present invention, the drive information includes a rotation speed of a drive source of the tractor and a rotation speed of a PTO shaft, and the input information includes a movement trajectory pattern of the tractor, at least one of basic statistical amounts of a vehicle speed of the tractor, at least one of basic statistical amounts of a rotation speed of the drive source, and at least one of basic statistical amounts of a rotation speed of the PTO shaft.

In one embodiment of the present invention, the operation information at least includes vehicle speed information of the tractor, drive source information relating to a drive state of the drive source of the tractor, and transmission mechanism information relating to an operation state of a transmission mechanism that transmits a drive force of the drive source to the work machine.

One embodiment of the present invention includes a work period determination unit that classifies a predetermined period into a work period and a non-work period, based on the tractor-side information acquired by the tractor-side information acquisition unit, and the work type estimation unit estimates a work type of work performed by the work machine mounted in the tractor, at each work period determined by the work period determination unit.

According to such a configuration, it is possible to automatically estimate a work type of work performed by the work machine.

In one embodiment of the present invention, the operation information at least includes drive source information relating to a drive state of the drive source of the tractor and transmission mechanism information relating to an operation state of a transmission mechanism that transmits a drive force of the drive source to the work machine, and the work period determination unit classifies the predetermined period into a work period and a non-work period, based on the transmission mechanism information, or the transmission mechanism information and the drive source information.

One embodiment of the present invention includes a work type acquisition unit that displays an input screen for inputting a work type performed by the work machine and acquires the work type input on the input screen as a final work type, the work type estimation unit outputs one or a plurality of work type candidates by estimating the work type, and the work type acquisition unit displays the one or the plurality of work type candidates so that one work type can didate is selectable from the one or the plurality of work type candidates output from the work type estimation unit.

In such a configuration, the options for inputting the work type can be narrowed down, so that the effort for inputting the work type can be reduced.

One embodiment of the present invention further includes a consumption calculation unit that calculates, if the final work type is any work type among seeding work, fertilizer application work, and chemical spraying work that consume a material, a consumption amount of the material, based on a weight change of the work machine mounted in the tractor.

In one embodiment of the present invention, the weight sensor is a load cell that is interposed between the tractor and the work machine and detects a traction force of the work machine towed by the tractor, and the consumption calculation unit calculates the consumption amount of the material, based on a difference between a detected traction force of the work machine towed by the tractor at a work start time and a traction force of the work machine towed by the tractor at a work end time.

### BRIEF DESCRIPTION OF DRAWINGS

FIG. 1 is a schematic diagram illustrating a configuration of a work management system to which a work machine identification device according to an embodiment of the present invention is applied.
FIG. 2 is a block diagram illustrating an electrical configuration of a tractor and a management server.
FIG. 3 is a schematic table showing an example of a content of a work classification table.
FIG. 4 is a schematic table showing an example of a content of a per-user tractor ID table for a certain user.
FIG. 5 is a schematic table showing an example of a content of a per-user work information table for a certain user.
FIG. 6 is a flowchart illustrating a procedure of a work type estimation process executed by a work type estimation unit in a certain work period.
FIG. 7A is a schematic diagram illustrating an example of a work type input screen.
FIG. 7B is a schematic diagram illustrating a state where a narrow-down pull-down menu is displayed on the work type input screen.

### DESCRIPTION OF EMBODIMENTS

An embodiment of the present invention will be described in detail below with reference to the accompanying drawings.

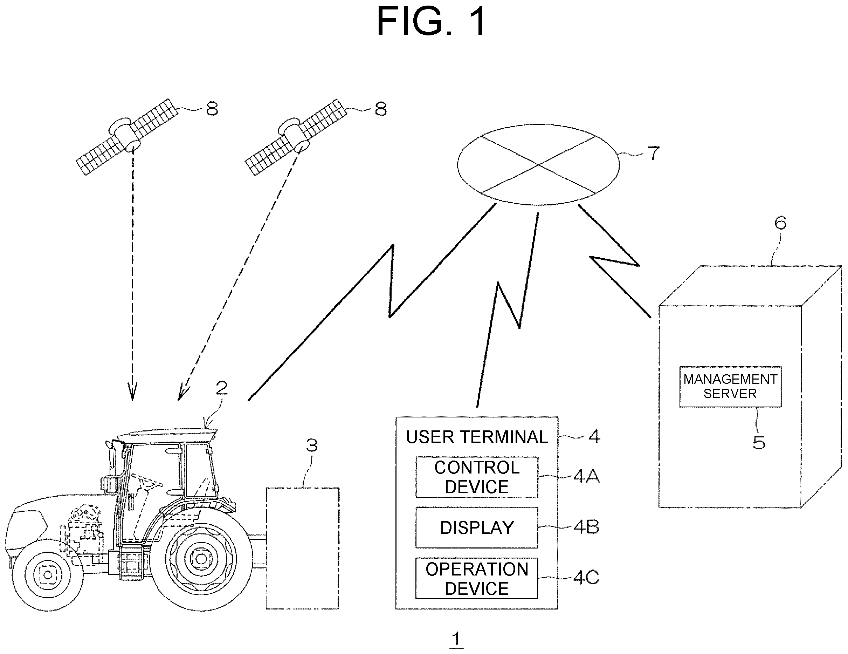

FIG. 1 is a schematic diagram illustrating a configuration of a work management system to which a work information management device according to an embodiment of the present invention is applied.

A work management system 1 includes a tractor 2, a work machine 3 mounted in the tractor 2, a user terminal 4, and a management server 5. The management server 5 manages work information of a user registered in advance, causes each user to input a part of the work information, and displays the work information to each user. The management server 5 is an example of the work information management device. The management server 5 is provided in a management center 6. The tractor 2 can communicate with the management server 5 via a communication network 7.

The user terminal 4 is a terminal used by a user who owns the tractor 2. The user terminal 4 can communicate with the management server 5 via the communication network 7.

The user terminal 4 is composed of a personal computer (PC), and includes a control device (a PC main body) 4A, a display 4B, and an operation device 4C such as a mouse and a keyboard. The control device 4A includes a CPU, a memory, a hard disk, and the like. In addition to an operation program (OS), the hard disk stores a program such as a browser for browsing Web pages, and other necessary data.

A plurality of types of work machines can be mounted in the tractor 2. The work machine 3 mounted in the tractor 2 includes, for example, a spraying system work machine and a tilling system (including a plowing system, a harrowing system, and a ground leveling system) work machine. The spraying system work machine includes a seeding machine, a sprayer (pest control machine), a broadcaster (fertilizer application machine), and the like. The tilling system work machine includes a rotary machine (cultivator machine), a soiler, a Cambridge roller, a mower (mowing machine), and the like.

The tractor 2 has a function of positioning the tractor 2 by utilizing a positioning satellite 8. The tractor 2 transmits a tractor ID and tractor-side information including position information for each time and operation information for each time to the management server 5. The tractor ID is information for identifying the tractor 2. The tractor ID may be composed of a model and machine number of the tractor 2.

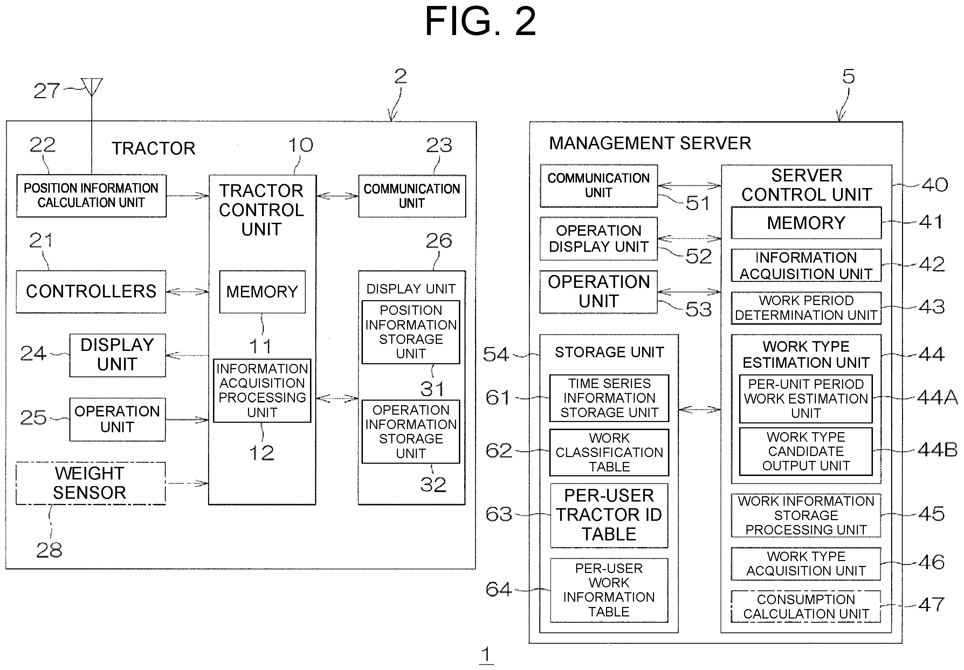

FIG. 2 is a block diagram illustrating an electrical configuration of the tractor 2 and the management server 5.

The tractor 2 includes a tractor control unit 10. The tractor control unit 10 includes a microcomputer provided with a CPU and a memory (such as a volatile memory and a non-volatile memory) 11. The tractor control unit 10 controls an operation of the tractor 2 (an operation such as moving forward, moving backward, stopping, and turning). A plurality of controllers (controllers 21) used for controlling each unit of the tractor 2 are electrically connected to the tractor control unit 10. The plurality of controllers include an engine controller that controls a rotation speed and the like of an engine (a drive source), a vehicle speed controller that controls a vehicle speed of the tractor 2, a steering controller that controls a steering angle of a front wheel of the tractor 2, a PTO shaft controller that controls a rotation of a PTO shaft, and the like.

The tractor 2 is provided with a PTO clutch for switching between transmission and cutoff of power to the PTO shaft (power transmission shaft). The PTO shaft controller can switch the PTO clutch, based on a control signal input from the tractor control unit 10, to rotationally drive or stop the work machine 3 via the PTO shaft.

The tractor control unit 10 is further connected to a position information calculation unit 22, a communication unit 23, a display unit 24, an operation unit 25, a storage unit 26, and the like.

A satellite signal receiving antenna 27 is electrically connected to the position information calculation unit 22. The satellite signal receiving antenna 27 receives a signal from the positioning satellite 8 (see FIG. 1) constituting a satellite positioning system. The satellite positioning system is a global navigation satellite system (GNSS), for example. The position information calculation unit 22 calculates the position of the tractor 2 (strictly speaking, the position of the satellite signal receiving antenna 27), on the basis of a positioning signal received by the satellite signal receiving antenna 27. Specifically, the position information calculation unit 22 generates positioning information including time information and position information. The position information includes latitude information and longitude information, for example.

The communication unit 23 is a communication interface used by the tractor control unit 10 to communicate with the management server 5 via the communication network 7. The display unit 24 is formed of a liquid crystal display device, for example. The operation unit 25 is provided with a plurality of levers, switches, and the like.

The storage unit 26 is composed of a storage device such as a non-volatile memory. The storage unit 26 is provided with a position information storage unit 31, an operation information storage unit 32, and the like.

The tractor control unit 10 includes an information acquisition processing unit 12. The information acquisition processing unit 12 acquires position information calculated by the position information calculation unit 22 at each predetermined time and stores the acquired position information in the position information storage unit 31. Further, the information acquisition processing unit 12 acquires operation information transmitted from the tractor control unit 10 at each predetermined time and stores the acquired operation information in the operation information storage unit 32. The operation information includes a vehicle speed, ON/OFF information of the engine (hereinafter referred to as "engine ON/OFF information"), engine RPM, ON/OFF information of the PTO clutch (hereinafter referred to as "clutch ON/OFF information"), a rotation speed of the PTO shaft (hereinafter referred to as "PTO shaft RPM"), an engine load factor, and the like. The engine load factor is, for example, the ratio of the deviation between the actual fuel injection amount and the fuel injection amount in an unloaded state to the deviation between the maximum fuel injection amount and the fuel injection amount in the unloaded state.

The information acquisition processing unit 12 transmits, together with the tractor ID, the position information for each time stored in the position information storage unit 31 and the operation information for each time stored in the operation information storage unit 32, to the management server 5 at a predetermined timing (for example, a timing when a power key is turned off). Hereinafter, the "position information and the operation information for each time" transmitted to the management server 5 may be referred to as "tractor-side information".

The management server 5 includes a server control unit 40. The server control unit 40 is connected to a communication unit 51, an operation display unit 52, an operation unit 53, a storage unit 54, and the like. The communication unit 51 is a communication interface used by the server control unit 40 to communicate with the tractor 2 and the user terminal 4 via the communication network 7. The operation display unit 52 is formed by a touch panel-type display, for example. The operation unit 53 includes a keyboard, a mouse, and the like. The storage unit 54 is composed of a storage device such as a hard disk and a non-volatile memory.

The storage unit 54 is provided with a time series information storage unit 61, a work classification table 62, a per-user tractor ID table 63, a per-user work information table 64, and the like.

The time series information storage unit 61 associates the tractor-side information received from the tractor control unit 10 with the tractor ID received from the tractor control unit 10 and stores the associated information.

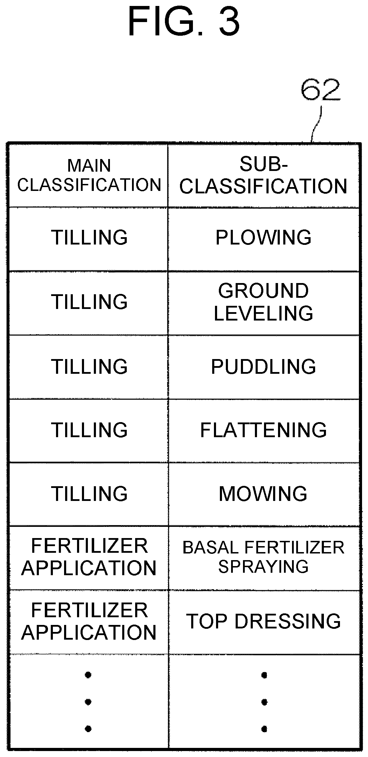

A plurality of types of work names are stored in the work classification table 62. FIG. 3 shows an example of a content of the work classification table 62. In the embodiment, agricultural work is hierarchically classified into a main classification and a sub-classification, and the work classification table 62 can store main classification work names and sub-classification work names. However, there may be a type of work having no sub -classification work name for a main classification work name. For such a type of work, only the main classification work name is stored.

The main classification work names include, for example, tilling, fertilizer application, seeding, planting, chemical spraying, harvesting, and the like. The sub-classification work names included in the tilling include subsoil crushing, levee plastering, plowing, ground leveling, puddling, flattening, mowing, and the like. The sub-classification work names included in the fertilizer application include basal fertilizer spraying and top dressing.

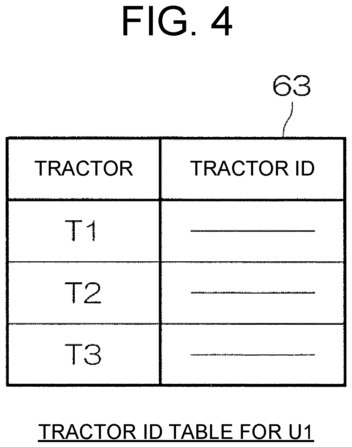

The per-user tractor ID table 63 stores, for each user, a tractor ID of a tractor owned by the user. FIG. 4 shows an example of a content of the per-user tractor ID table 63 for a user U1. In the example of FIG. 4, the user U1 owns three tractors T1, T2, and T3.

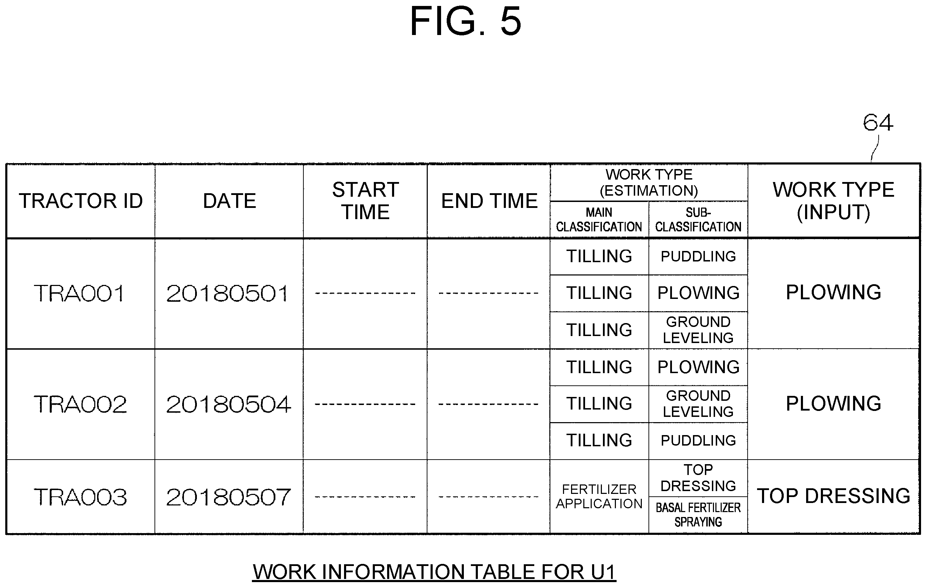

The per-user work information table 64 stores, for each user, work information of work performed by the user using the tractor owned by the user. FIG. 5 shows an example of a content of the per-user work information table 64 for the user U1. In the example of FIG. 5, the work information includes the tractor ID, a work date (date), a work start time (start time), a work end time (end time), a work type (estimation) estimated by a work type estimation unit 44 described later, a final work type (input) input by the user as described later, and the like. The work type (estimation) estimated by the work type estimation unit 44 includes a main classification name and a sub-classification name.

The server control unit 40 includes a microcomputer provided with a CPU and a memory (such as a volatile memory and a non-volatile memory) 41. The server control unit 40 includes an information acquisition unit 42, a work period determination unit 43, the work type estimation unit 44, a work information storage processing unit 45, and a work type acquisition unit 46. The information acquisition unit 42 is an example of the "tractor-side information acquisition unit" of the present invention.

When receiving the tractor-side information together with the tractor ID from the tractor 2, the information acquisition unit 42 associates the received tractor-side information with the received tractor ID and stores the associated information in the time series information storage unit 61. For ease of explanation, the tractor-side information accumulated on a certain day in the storage unit 26 (31, 32) of the tractor 2 owned by a certain user is referred to as "time series information to be processed". It is assumed that the time series information storage unit 61 stores the time series information to be processed.

The work period determination unit 43 classifies a period from a time longest ago to a time most recent (period to be processed) in the time series information to be processed into a work period and a non-work period.

For example, the work period determination unit 43 first determines, for each time, whether the tractor 2 is in a working state or a non-working state, based on the engine ON/OFF information and the clutch ON/OFF information included in the time series information to be processed. More specifically, the work period determination unit 43 determines whether or not a work/non-work determination condition that the engine ON/OFF information is ON and the clutch ON/OFF information is ON is satisfied at each time within the period to be processed.

If the work/non-work determination condition is satisfied at a certain determination target time, the work period determination unit 43 determines that the tractor 2 is in the work state at the time, and if the work/non-work estimation condition is not satisfied, the work period determination unit 43 determines that the tractor 2 is in the non-work state at the time. Subsequently, the work period determination unit 43 classifies the period to be processed into the work period and the non-work period, based on a work state determination result at each time.

The work period determination unit 43 may use only the condition that the clutch ON/OFF information is ON as the work/non-work estimation condition.

The work type estimation unit 44 performs, in each work period determined by the work period determination unit 43, processing for estimating the work type of work performed by the work machine 3 mounted in the tractor 2, based on tractor information acquired by the information acquisition unit 42, to output one or a plurality of work type candidates. The work type estimation unit 44 includes a per-unit period work estimation unit 44A and a work type candidate output unit 44B.

The per-unit period work estimation unit 44A divides the work period into a plurality of unit periods, and estimates, for each unit period, a work type of work performed in the unit period as a per-unit period work type. In the embodiment, the unit period is set to 5 minutes. Further, in the embodiment, the per-unit period work estimation unit 44A estimates the per-unit period work type by using a machine learning method (a machine learning model). The machine learning method includes, for example, a support vector machine, a random forest, a neural network, logistic regression, topological data analysis, and the like.

The work type candidate output unit 44B outputs one or a plurality of work type candidates, based on the per-unit period work type estimated by the per-unit period work estimation unit 44A.

The work information storage processing unit 45 stores, for each work period, the one or the plurality of work type candidates output from the work type candidate output unit 44B, as the work type (estimation) estimated by the work type estimation unit 44, in the per-user work information table 64. At this time, the work information storage processing unit 45 associates the work type candidate output from the work type candidate output unit 44B with the tractor ID, the date, the start time, the end time, and the like, and stores the associated information in the per-user work information table 64.

After the work information storage processing unit 45 stores the work type candidate output from the work type candidate output unit 44B in the per-user work information table 64, when the work type acquisition unit 46 acquires a work type, the work information storage processing unit 45 stores the work type as a final work type (input) in the per-user work information table 64.

The work type acquisition unit 46 displays an input screen for inputting a work type performed by the work machine 3 mounted in the tractor 2, and acquires a work type input on the input screen as the final work type. The work type acquisition unit 46 is configured to display a plurality of work type candidates so that one work type candidate can be selected from the plurality of work type candidates output from the work type estimation unit 44.

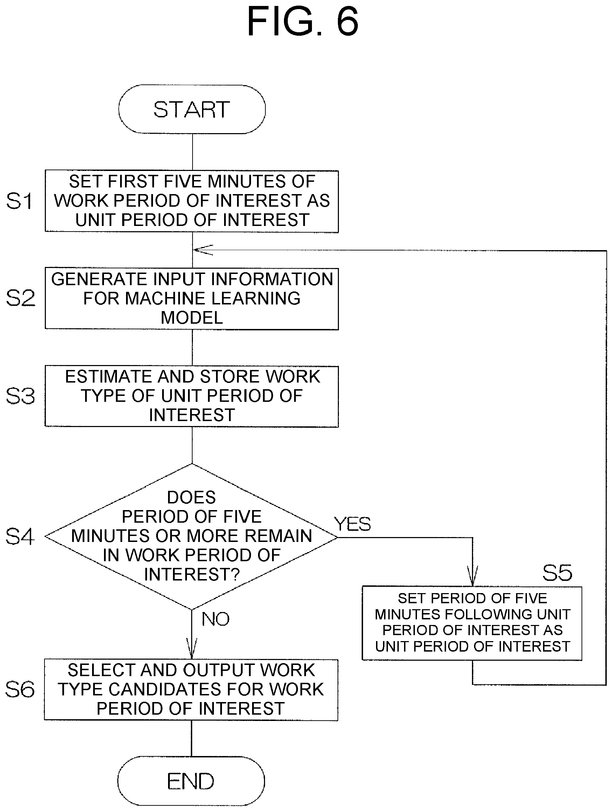

FIG. 6 is a flowchart illustrating a procedure of a work type estimation process executed by the work type estimation unit 44 in a certain work period (hereinafter referred to as work period of interest).

The work type estimation process executed by the work type estimation unit 44 includes an estimation process (steps S1 to S5) executed by the per-unit period work estimation unit 44A and an output process (step S6) executed by the work type candidate output unit 44B.

Referring to FIG. 6, the per-unit period work estimation unit 44A sets a period including the first five minutes of the work period of interest as a unit period of interest (step S1).

Next, the per-unit period work estimation unit 44A generates input information for a machine learning model, based on tractor-side information in the unit period of interest (step S2).

The input information includes a movement trajectory pattern of the tractor 2 during the unit period of interest, at least one of the basic statistical amounts of the vehicle speed of tractor 2 during the unit period of interest, at least one of the basic statistical amounts of the engine RPM during the unit period of interest, and at least one of the basic statistical amounts of the PTO shaft RPM during the unit period of interest. The basic statistical amounts include a sum, an average, a standard deviation, a minimum value, a maximum value, a median value, and a mode value. The movement trajectory pattern of the tractor 2 during the unit period of interest is a pattern closest to a movement trajectory pattern during the unit period of interest, among a plurality of previously determined movement trajectory patterns.

The input information may include, for example, the movement trajectory pattern of the tractor 2, an average value, a standard deviation, a maximum value, and a median value of the vehicle speed, an average value, a standard deviation, a maximum value, and a median value of the engine RPM, and an average value, a standard deviation, a maximum value, and a median value of the PTO shaft RPM.

The input information may further include at least one of the basic statistical amounts of the engine load factor. For example, the input information may include an average value, a standard deviation, a maximum value, and a median value of the engine load factor.

Next, the per-unit period work estimation unit 44A uses the input information generated in step S2 and the machine learning model to estimate the work type of the unit period of interest, and stores an estimation result in the memory 41 (step S3). In the embodiment, it is assumed that the per-unit period work estimation unit 44A estimates one work type as the work type of the unit period of interest.

Next, the per-unit period work estimation unit 44A determines whether or not a period of five minutes or more remains in a (new) period temporally later than the unit period of interest during the work period of interest (step S4). If a period of five minutes or more remains (step S4: YES), a period of five minutes following the current work period of interest is set as a new work period of interest (step S5), and then, the processing returns to step S2. Thus, the processes of steps S2 to S4 are executed for the new work period of interest.

In step S4, when determining that no period of five minutes or more remains in the period temporally later than the unit period of interest during the work period of interest (step S4: NO), the per-unit period work estimation unit 44A proceeds to step S6.

In step S6, the work type candidate output unit 44B selects and outputs a plurality of work type candidates, based on work type estimation results of the unit periods of every five minutes during a work section of interest. For example, the work type candidate output unit 44B selects and outputs a plurality of work type candidates from the work types of each unit period during the work period of interest, based on an estimated number of work types. Specifically, the work type candidate output unit 44B selects and outputs, among the work types of each unit period during the work period of interest, a plurality of most frequent work types placed on top (the three topmost work types in this example) as work type candidates in the work period of interest.

For example, ten unit periods are included in the work period of interest. When the work type of four unit periods, among the ten unit periods, is estimated to be tilling (puddling), the work type of three unit periods is determined to be tilling (plowing), the work type of two unit periods is determined to be tilling (ground leveling), and the work type of one unit period is determined to be tilling (mowing), "tilling (puddling)", "tilling (plowing)", and "tilling (ground leveling)" are output as the work type candidates.

As described above, in the present embodiment, the work type is estimated for each unit period, and then, the work type is estimated by majority decision logic, and thus, the following advantages are obtained.

For example, when the work type is estimated for the entire work period by using a machine learning method and the estimation result is determined as the final work type, if there is a work type closely resembling the work type actually performed, a work type different from the work actually performed may be obtained in the estimation, due to the ambiguity in the machine learning method. However, in the present embodiment, even if there is a work type closely resembling the work type actually performed, it can be assumed that the probability is high that, in the estimation results for each of the plurality of unit periods during the work period, the number of times the estimation result is the work type actually performed is larger than the number of times the estimation result is a work type different from the work actually performed. Thus, in the present embodiment, the work type is estimated with high accuracy.

If, for some reason, the tractor is temporarily moved during the work period in a manner that is not suitable for the work to be actually performed, a work type different from the actual work type may be unfortunately estimated as the work type of the unit period, in some unit periods of the plurality of unit periods during the work period. However, even in such a case, in the present embodiment, the final work type is determined by the majority decision logic, and thus, it is possible to estimate the actual work type.

When the work type candidates for the work period of interest are output in this manner, the work information storage processing unit 45 associates the output work type candidates (main classification and sub-classification) with the tractor ID, the date, the start time, the end time, and the like of the work period of interest, and stores the associated information in the per-user work information table 64 (see FIG. 5). By repeating such processing, work type candidates for all work periods within the period to be processed are stored in the per-user work information table 64 (see FIG. 5).

An operation of the work type acquisition unit 46 will be described in detail below.

The user can operate the user terminal 4 to open a home page provided by the management server 5 and perform a login operation, to acquire a Web page dedicated to the user. On the Web page dedicated to the user, the user can view a work type input screen for inputting a work type of the work performed by the user using the tractor 2.

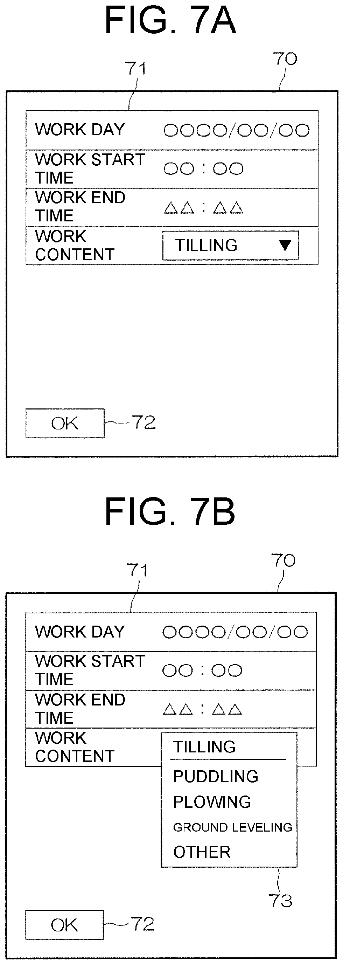

Specifically, when the user performs, on the Web page dedicated to the user, an operation for acquiring the work type input screen for predetermined work (hereinafter referred to as "work of interest") performed by the user, the work type acquisition unit 46 generates a Web page including a work type input screen for the work of interest and provides the generated Web page to the user terminal 4. Thus, a work type input screen 70 such as illustrated in FIG. 7A is displayed on the user terminal 4, for example.

The work type input screen 70 displays an item presentation unit 71 including items such as a work day, a work start time, a work end time, and a work type of the work of interest, and an OK button 72. A work day, a work start time, and a work end time determined by the management server 5 are displayed as the items of the work day, the work start time, and the work end time of the work of interest.

One or a plurality of work type candidates output from the work type estimation unit 44 for the work of interest are selectably displayed as work type items. For example, when the three work type candidates "tilling (puddling)", "tilling (plowing)", and "tilling (ground leveling)" are output from the work type estimation unit 44 for the work of interest, as illustrated in FIG. 7A, one of the main classification names or one of the sub-classification names of the work type candidates is displayed as the work type item. In the example, "tilling", which is one of the main items among the plurality of work type candidates corresponding to the work of interest, is displayed.

If the work type item is clicked, as illustrated in FIG. 7B, a narrow-down pull-down menu 73 is displayed below a work name item displayed first as the work type item. The narrow-down pull-down menu 73 includes, among the plurality of work type candidates corresponding to the work of interest, work names other than the work name item displayed first (including main classification work names and sub-classification work names) and an item "other". The user selects, from the narrow-down pull-down menu 73, any one of the main classification names and the sub-classification names included in the plurality of work type candidates corresponding to the work of interest, or "other".

When one work name is selected from the narrow-down pull-down menu 73, the one work name is displayed in the work type item. If the OK button 72 is clicked in this state, the work name selected from the narrow-down pull-down menu 73 is sent from the user terminal 4 to the management server 5. When receiving the work name from the user terminal 4, the management server 5 (the work information storage processing unit 45) stores the received work name as a final work type (input) in a work information storage area corresponding to the work of interest in the per-user work information table 64 (see FIG. 5).

If "other" is selected from the narrow-down pull-down menu 73, a general-purpose pull-down menu (not illustrated) for selecting one work type from all work types is displayed, and thus, the user selects one work type from the general-purpose pull-down menu.

In the present embodiment, it is possible to narrow down the options when the user inputs the work type, so that the effort by the user can be reduced.

The embodiment of the present invention has been described above, but the present invention can also be implemented in other forms.

For example, in the above-described embodiment, the work types are classified in a hierarchical manner such as a main classification and a sub-classification, but the work types may be classified in a non-hierarchical manner.

Further, in the above-described embodiment, the narrow-down pull-down menu 73 is displayed so that the actually performed work type can be selected from the plurality of work type candidates. However, the display format by which the user selects the work type actually performed from among the plurality of work type candidates may be a display format other than the pull-down menu. For example, the plurality of work type candidates may be displayed as a list, and a work type selection list for selecting one work type candidate from the list may be displayed by a pop-up window or the like.

In this case, only all of the main classification names included in the plurality of work type candidates may be displayed in a list, or only all of the sub-classification names included in the plurality of work type candidates may be displayed in a list, or a combination of the main classification names and the sub-classification names included in the plurality of work type candidates may be displayed in a list. Further, the work type selection list may be displayed when the pull-down menu is opened.

In the embodiment described above, the per-unit period work estimation unit 44A estimates one work type as the work type of the unit period of interest. However, the per-unit period work estimation unit 44A may determine, as the work type of the unit period of interest, one or a plurality of work type candidates (hereinafter, referred to as "first work type candidate") and a probability whether the first work type candidate is the work type of the unit period of interest. As described above, when a machine learning method is used to estimate the work type, it is possible to obtain, as the work type of the unit period of interest, one or a plurality of the first work type candidates and the probability whether the first work type candidate is the work type of the unit period of interest.

In this case, the work type candidate output unit 44B outputs, based on the one or the plurality of first work type candidates and the corresponding probabilities determined in each unit period during the work period of interest, one or a plurality of work type candidates (hereinafter referred to as "second work type candidate") for the work period of interest. Specifically, the work type candidate output unit 44B calculates the sum of the probabilities of the same first work type candidates during the work period of interest. A plurality of topmost first work type candidates (for example, the three topmost first work type candidates) having a large addition result of the probabilities is output as the second work type candidate of the work period of interest. In this case, the second work type candidate corresponds to the "work type candidate" in the present invention.

The work type candidate output unit 44B may determine, as the final work type, a most frequent work type among per-unit time work types determined by the per-unit period work estimation unit 44A. In this case, it is possible to omit the work type acquisition unit 46 utilized by the user to select the work type.

As illustrated by a dot-dash line in FIG. 2, a weight sensor 28 for detecting the weight of the work machine 3 mounted in the tractor 2 may be provided in the tractor 2. In this case, as illustrated by the dot-dash line in FIG. 2, the management server 5 may include a consumption calculation unit 47. If the final work type is any work type among seeding work, fertilizer application work, and chemical spraying work that consume a material, the consumption calculation unit 47 calculates a consumption amount of the material, based on a change in the weight of the work machine 3 detected by the weight sensor 28. In this case, it is possible to identify which material is used, based on the final work type.

The weight sensor 28 may be a load cell that is interposed between the tractor 2 and the work machine 3 and detects a traction force of the work machine 3 towed by the tractor 2. In this case, the consumption calculation unit 47 may calculate the consumption amount of the material, based on a difference between the traction force detected by the load cell at a work start time and the traction force detected by the load cell at a work end time.

When the user registers a consumption amount per unit area in advance for each of a plurality of materials used in agricultural work, it is possible to automatically estimate which material is used, by calculating the material consumption amount per unit area from the consumption amount of the material calculated as described above.

It is noted that various changes can be made without departing from the scope of the claims.

The present invention is not limited to the embodiments described above, and the embodiments can be appropriately modified or changed within the scope of the technical idea of the present invention. The technique of each embodiment can be used in other embodiments as long as no technical contradiction is caused.

The present application claims priority based on Japanese Patent Application 2019-218090 filed on December 2, 2019 and Japanese Patent Application 2019-218091 filed on December 2, 2019, of which the entire contents are included herein.

## Claims

1. A work information management device, comprising:
a tractor-side information acquisition unit that acquires, from a tractor mounted with any of a plurality of types of work machines, tractor-side information including position information of the tractor at each time and operation information of the tractor at each time;
and
a work type estimation unit that estimates a work type of work performed by the work machine mounted in the tractor, based on the tractor-side information acquired by the tractor-side information acquisition unit.

2. The work information management device according to claim 1, wherein the work type estimation unit includes a per-unit period work estimation unit that divides a work period into a plurality of unit periods, and estimates, for each unit period, a work type of work performed in the unit period as a per-unit period work type, and
the work type estimation unit estimates, for the per-unit period work type, a work type of the work period, based on a number of the estimated work type.

3. The work information management device according to claim 2, wherein the per-unit period work estimation unit estimates the per-unit period work type by using a machine learning method.

4. The work information management device according to claim 3, wherein the per-unit period work estimation unit
generates, based on the position information and the operation information, input information for a machine learning model in each unit period, and
estimates the per-unit period work type by using the generated input information and the machine learning model.

5. The work information management device according to claim 4, wherein the operation information includes a rotation speed of a drive source of the tractor and a rotation speed of a PTO shaft, and
the input information includes a movement trajectory pattern of the tractor, at least one of basic statistical amounts of a vehicle speed of the tractor, at least one of basic statistical amounts of a rotation speed of the drive source, and at least one of basic statistical amounts of a rotation speed of the PTO shaft.

6. The work information management device according to any one of claims 1 to 4, wherein the operation information at least includes vehicle speed information of the tractor, drive source information relating to a drive state of a drive source of the tractor, and transmission mechanism information relating to an operation state of a transmission mechanism that transmits a drive force of the drive source to the work machine.

7. The work information management device according to any one of claims 1 to 4, further comprising:
a work period determination unit that classifies a predetermined period into a work period and a non-work period, based on the tractor-side information acquired by the tractor-side information acquisition unit, wherein
the work type estimation unit estimates a work type of work performed by the work machine mounted in the tractor, at each work period determined by the work period determination unit.

8. The work information management device according to claim 7, wherein the operation information at least includes drive source information relating to a drive state of a drive source of the tractor and transmission mechanism information relating to an operation state of a transmission mechanism that transmits a drive force of the drive source to the work machine, and
the work period determination unit classifies the predetermined period into a work period and a non-work period, based on the transmission mechanism information, or the transmission mechanism information and the drive source information.

9. The work information management device according to any one of claims 1 to 8, further comprising:
a work type acquisition unit that displays an input screen for inputting a work type performed by the work machine, and acquires the work type input on the input screen as a final work type, wherein
the work type estimation unit outputs one or a plurality of work type candidates by estimating a work type of work performed by the work machine mounted in the tractor, and
the work type acquisition unit displays the one or the plurality of work type candidates so that one work type candidate is selectable from the one or the plurality of work type candidates output from the work type estimation unit.

10. The work information management device according to claim 9, further comprising a consumption calculation unit that calculates, if the final work type is any work type among seeding work, fertilizer application work, and chemical spraying work that consume a material, a consumption amount of the material, based on a weight change of the work machine mounted in the tractor.

11. The work information management device according to claim 10, wherein the consumption calculation unit calculates the consumption amount of the material, based on a difference between a traction force of the work machine towed by the tractor at a work start time and a traction force of the work machine towed by the tractor at a work end time.
